# EUROPEAN PATENT SPECIFICATION

(11) **EP 3 240 702 B1**
(45) Date of publication and mention of the grant of the patent: **05.05.2021**
(21) Application number: 15875854.0
(22) Date of filing: 09.10.2015
(51) Int. Cl.: B60C 23/00, B60C 23/02, B60C 23/04, B60C 23/06, B60C 23/20, B29D 30/00

(54) **RUBBER ARTICLE INCLUDING ELECTRONICS DEVICE FASTENER**
GUMMIARTIKEL MIT ELEKTRONIKVORRICHTUNGSBEFESTIGUNGSELEMENT
ARTICLE EN CAOUTCHOUC COMPRENANT UN DISPOSITIF DE FIXATION DE DISPOSITIF ÉLECTRONIQUE

(30) Priority: 30.12.2014 US 201462098327 P
(43) Date of publication of application: 08.11.2017
(73) Proprietor: Bridgestone Americas Tire Operations, LLC, Nashville, TN 37201 (US)
(72) Inventor: WEI, Terrence E., Copley, Ohio 44321 (US); DORFI, Hans R., Akron, Ohio 44303 (US); WILSON, Paul B., Tallmadge, Ohio 44278 (US); AGARWAL, Sheel P., Solon, Ohio 44139 (US); MIKLIC, Andrew T., Akron, Ohio 44312 (US); NESBITT, Adam K., Akron, Ohio 44312 (US); COSTLOW, Douglas B., Akron, Ohio 44301 (US); WIDENOR, Ross W., Stow, Ohio 44224 (US); RENSEL, John D., Tallmadge, Ohio 44278 (US)
(74) Representative: Banzer, Hans-Jörg
(86) International application number: PCT/US2015/054806
(87) International publication number: WO 2016/108986

(56) References cited:
- EP-A1- 1 721 760
- DE-A1-102012 208 154
- JP-A- 2012 025 319
- JP-A- 2012 232 721
- JP-A- 2014 118 078
- US-A1- 2006 220 816
- US-A1- 2007 169 865
- US-A1- 2012 160 409
- US-A1- 2013 014 876
- US-A1- 2013 081 457
- US-A1- 2014 261 944

## Description

### CROSS-REFERENCE TO RELATED APPLICATIONS

### BACKGROUND

In the manufacture of a rubber article, including for example a vehicle tire, it may be desirable to attach devices to the rubber article through easily attachable and/or removable methods. For example, it may be desirable to attach electronic devices to rubber articles, including for example, sensors, power generators, transmitters, identification devices, and the like.

Traditionally, attachment of devices to a rubber article, including for example a vehicle tire, may involve adhesion of a device to the rubber article, or alternatively adhesion of a base element to the rubber article, wherein the device is rigidly attached to the base element. However, many rubber articles bend repeatedly during use. For example, a vehicle tire typically undergoes various deformations upon ever revolution of the tire. As a result, devices or base elements adhered to a rubber article may delaminate from the rubber article, thus permitting the device to be lost or damaged, or otherwise causing down time in the rubber article A tire according to the preamble of claim 1 is known from JP2012025319. Further examples for attaching a device to a rubber article are disclosed in JP2014118078, EP1721760, US2013081457 and DE102012208154.

What is needed is a system for attaching devices, such as electronic devices, to rubber articles.

### SUMMARY

According to the invention a tire with the features of claim 1 is provided. Preferred embodiments of the present invention are the subject matter of the dependent claims.

### BRIEF DESCRIPTION OF THE DRAWINGS

The accompanying figures, which are incorporated in and constitute a part of the specification, illustrate various example systems and apparatuses, and are used merely to illustrate various example embodiments. In the figures, like elements bear like reference numerals.
**FIG. 1A** illustrates a side sectional view of a rubber article having a cavity connected to a surface of the article via a channel.
**FIG. 1B** illustrates a bottom sectional view of a rubber article having a cavity connected to a surface of the article via a channel.
**FIG. 2** illustrates a sectional view of a fastener having a protrusion for engaging a cavity of a rubber article.
**FIG. 3** illustrates a sectional view of a fastener having a protrusion for engaging a cavity of a rubber article, coupled to a rubber article featuring a cavity.
**FIG. 4A** illustrates a sectional view of a fastener having a protrusion for engaging a cavity of a tire, fastened to a device and coupled to a tire featuring a cavity.
**FIG. 4B** illustrates a sectional view of a fastener having a protrusion for engaging a cavity of a tire, fastened to a device and coupled to a tire featuring a cavity.
**FIG. 5A** illustrates a sectional view of a fastener having a protrusion for engaging a cavity of a tire, fastened to a device and coupled to a tire featuring a cavity.
**FIG. 5B** illustrates a sectional view of a fastener having a protrusion for engaging a cavity of a tire, fastened to a device and coupled to a tire featuring a cavity.
**FIG. 5C** illustrates a sectional view of a fastener having a protrusion for engaging a cavity of a tire, fastened to a device and coupled to a tire featuring a cavity.
**FIG. 6** illustrates a sectional view of a fastener having a protrusion for engaging a cavity of a rubber article, fastened to a device and coupled to a rubber article featuring a cavity.
**FIG. 7** illustrates a sectional view of a fastener having a protrusion for engaging a cavity of a rubber article, fastened to a device and coupled to a rubber article featuring a cavity.
**FIG. 8** illustrates a sectional view of a fastener having a protrusion for engaging a cavity of a rubber article, fastened to a device and coupled to a rubber article featuring a cavity.
**FIG. 9** illustrates a sectional view of a fastener having a protrusion for engaging a cavity of a rubber article, fastened to a device and coupled to a rubber article featuring a cavity.

### DETAILED DESCRIPTION

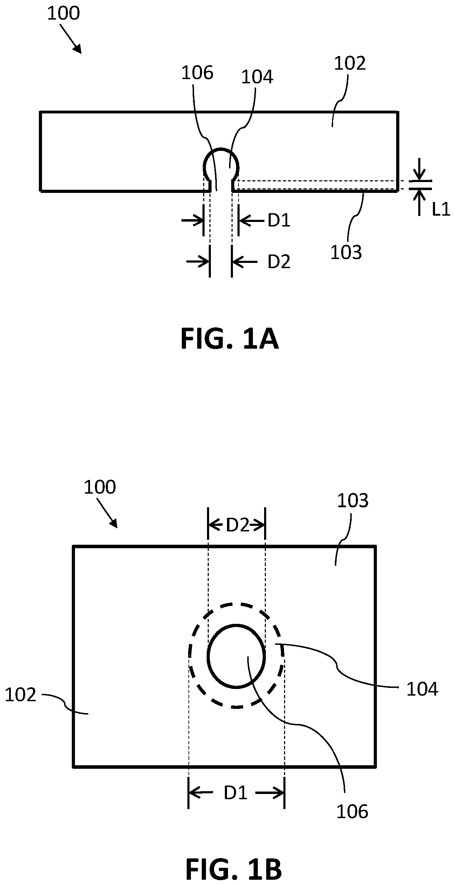

**FIG. 1A** illustrates a side sectional view of a rubber article **100.** Rubber article **100** may include a body **102.** Body **102** may include at least one surface **103.** Body **102** may include a cavity **104.** Cavity **104** may be oriented within a portion of body **102.** Cavity **104** may be in communication with the at least one surface **103** via a channel **106.**

Rubber article **100** may include any of a variety of articles. Rubber article **100** may be an article having elastic properties and capable of deforming and returning to a shape that is substantially the same as its original shape. Rubber article **100** may include a vehicle tire. Rubber article **100** may include a pneumatic vehicle tire. Rubber article **100** may include a non-pneumatic vehicle tire. Rubber article **100** may include an air spring. Rubber article **100** may include a rubber article for attachment to another rubber article, including for example a vehicle tire or an air spring. Such a rubber article for attachment to another rubber article may be referred to as a "patch." The patch may be bonded to another rubber article through any of a variety of mechanisms, including for example through an adhesive, an epoxy, crosslinking, and the like. The patch may be laminated to another rubber article. Rubber article **100** may include any of a variety of rubber articles to which one may desire to attach a device, such as an electronic device.

Body **102** may include any portion of rubber article **100** having sufficient dimensions to include cavity **104.** Body **102** may include a portion of a vehicle tire. Body **102** may include a portion of a vehicle tire in the crown region of the tire. Body **102** may include a portion of a vehicle tire in the shoulder region of the tire. Body **102** may include a portion of a vehicle tire in the sidewall region of the tire. Body **102** may include at least a portion of a patch for attachment to a rubber article, including for example a tire. Body **102** may be comprised of a rubber material. Body **102** may be comprised of a polymer material. Body **102** may be a composite of any of a variety of materials.

Surface **103** may be any surface of body **102.** Surface **103** may be any surface of body **102** to which one wishes to attach a device. Surface **103** may be defined as a first surface of rubber article **100,** wherein body **102** is contained between the first surface of rubber article **100** and a second surface of rubber article **100.** Rubber article **100** may be generally oriented as a container with an interior and an exterior, wherein surface **103** is at least one of an interior surface and an exterior surface. Surface **103** may be a first surface and an interior surface, while a second surface may be an exterior surface. Alternatively, surface **103** may be a first surface and an exterior surface, while a second surface may be an interior surface. Surface **103** may be an innerliner material within a vehicle tire. Surface **103** may be an interior surface of a tire. Surface **103** may be an interior surface of a tire in a crown region of the tire. Surface **103** may be an interior surface of a tire in a shoulder region of the tire. Surface **103** may be an interior surface of a tire in a sidewall region of the tire. Surface **103** may be an interior surface of a tire in a bead region of the tire. Surface **103** may be an exterior surface of a tire. Surface **103** may be an exterior surface of a tire in a shoulder region of the tire. Surface **103** may be an exterior surface of a tire in a sidewall region of the tire. Surface **103** may be an exterior surface of a tire in a bead region of the tire. Surface **103** may be a surface of a patch to be attached to a rubber article, including for example a tire. Surface **103** may be a surface of a patch substantially opposite a surface of the patch to be attached to the rubber article. Surface **103** may be an interior surface of a tire in a crown region of the tire, where a second surface is a tread surface of a tire. Surface **103** may be an interior surface of a tire in a sidewall region of the tire, where a second surface is a sidewall surface of a tire. Surface **103** may be a tread surface of a tire, where a second surface is an interior surface of a tire in a crown region of the tire. Surface **103** may be a sidewall surface of attire, where a second surface is an interior surface of a tire in a sidewall region of the tire.

Cavity **104** may be oriented within body **102** a distance from surface **103.** Cavity **104** may be oriented such that cavity **104** communicates with surface **103** via channel **106.** Alternatively, cavity **104** may be shaped such that it may communicate with surface **103** without a channel **106.**

Cavity **104** may be a generally sphere-shaped cavity. Cavity **104** may be a generally cylinder-shaped cavity. Cavity **104** may be a generally teardrop-shaped cavity. Cavity **104** may be a generally cone-shaped cavity. Cavity **104** may be a generally cube-shaped cavity. Cavity **104** may be a generally cuboid-shaped cavity. Cavity **104** may be a generally pyramid-shaped cavity. Cavity **104** may be a generally tetrahedron-shaped cavity. Cavity **104** may be a generally ribbed cavity, including at least one rib. Cavity **104** may have any of a variety of shapes. Cavity **104** may include any shape capable of accepting a corresponding shape attached to a device. Cavity **104** may include any three dimensional shape capable of creating an interference fit with a corresponding protrusion from a device.

Cavity **104** may have a cavity major width **D1.** Cavity major width **D1** may be measured substantially parallel to surface **103.** Where rubber article **100** is a vehicle tire, cavity major width **D1** may be measured in at least one of an axial direction and a circumferential direction within the tire. Cavity major width **D1** may be defined as the maximum width of cavity **104** measured substantially parallel to surface **103.** Cavity major width **D1** may be defined as the maximum width of cavity **104** measured in an axial direction within a tire. Cavity major width **D1** may be defined as the maximum width of cavity **104** measured in a circumferential direction within a tire.

Channel **106** may be a void connecting cavity **104** to surface **103.** Channel **106** may extend between cavity **104** and surface **103.** Channel **106** may be configured to accept a protrusion from a device and allow the protrusion to be extended through channel **106** and engage cavity **104.** Channel **106** may be substantially cylindrical in shape. Channel **106** may be substantially cuboid in shape. Channel **106** may have a substantially circular cross-section. Channel **106** may have any of a variety of cross-sections.

Channel **106** may include a channel length **L1.** Channel length **L1** may be measured substantially perpendicular to surface **103.** Where rubber article **100** is a vehicle tire, channel length **L1** may be measured in at least one of a radial direction and an axial direction within the tire. Length **L1** may be any of a variety of lengths. Length **L1** may be about 2.0 mm. Length **L1** may be between about 1.0 mm and about 3.0 mm. Length **L1** may be between about 0.5 mm and about 5.0 mm. Length **L1** may be between about 1.0 mm and about 7.0 mm.

Channel **106** may have a channel major width **D2.** Channel major width **D2** may be measured substantially parallel to surface **103.** Where rubber article **100** is a vehicle tire, channel major width **D2** may be measured in at least one of an axial direction and a circumferential direction within the tire. Channel major width **D2** may be defined as the maximum width of channel **106** measured substantially parallel to surface **103.** Channel major width **D2** may be defined as the maximum width of channel **106** measured in an axial direction within a tire. Channel major width **D2** may be defined as the maximum width of channel **106** measured in a circumferential direction within a tire.

Cavity major width **D1** may be greater than channel major width **D2.** Cavity major width **D1** may be between about 110 % and about 400 % of channel major width **D2.** Cavity major width **D1** may be between about 150 % and about 300 % of channel major width **D2.** Cavity major width **D1** may be between about 200 % and about 250 % of channel major width **D2.** Cavity major width **D1** may be about 250 % of channel major width **D2.** Cavity major width **D1** may be between about 200 % and about 300 % of channel major width **D2.** Cavity major width **D1** may be about equal to channel major width **D2.**

In one embodiment, cavity major width **D1** may be about 5.0 mm. Cavity major width **D1** may be between about 1.0 mm and about 10.0 mm. Cavity major width **D1** may be between about 3.0 mm and about 7.0 mm. Cavity major width **D1** may be between about 4.0 mm and about 6.0 mm.

Channel major width **D2** may be about 2.0 mm. Channel major width **D2** may be between about 0.2 mm and about 8.0 mm. Channel major width **D2** may be between about 0.5 mm and about 5.0 mm. Channel major width **D2** may be between about 1.0 mm and about 3.0 mm.

Channel **106** may be oriented so as to deform at least partially and expand to allow a protrusion (not shown) corresponding to cavity **104** to pass through. Channel **106** may be bound at least partially by a deformable material, such as for example a rubber, a polymer, and the like. Channel **106** may be configured so as to maintain its shape and not deform during passage therethrough of a protrusion (not shown) corresponding to cavity **104,** but rather the protrusion may deform to fit through channel **106** to engage cavity **104.** Alternatively, rubber article **100** may have no channel **106,** but rather, cavity **104** may be in communication with surface **103** without the need for channel **106.**

Cavity **104** may be molded into rubber article **100** during the molding and/or creation of rubber article **100.** Cavity **104** may be formed into rubber article **100** after the molding and/or creation of rubber article **100,** for example by cutting away material from rubber article **100** to form cavity **104.**

Channel **106** may be molded into rubber article **100** during the molding and/or creation of rubber article **100.** Channel **106** may be formed into rubber article **100** after the molding and/or creation of rubber article **100,** for example by cutting away material from rubber article **100** to form channel **106.**

**FIG. 1B** illustrates a bottom sectional view of a rubber article **100.** As illustrated, each of cavity **104** and channel **106** may have a substantially circular cross-section. Cavity major width **D1** may be greater than channel major width **D2.**

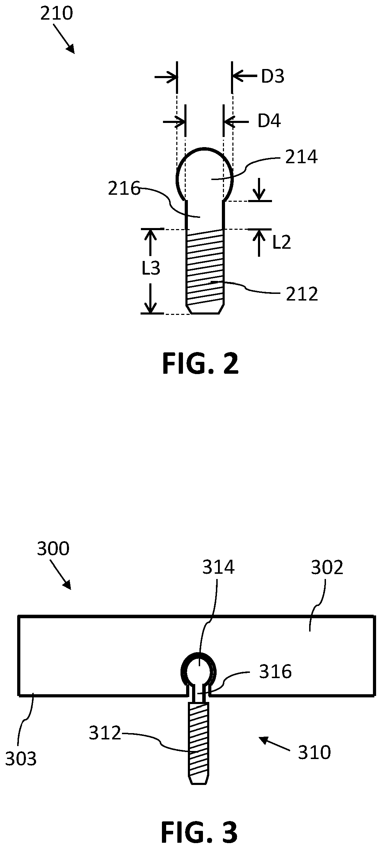

**FIG. 2** illustrates a sectional view of an device fastener **210** having a protrusion **214** for engaging a cavity of a rubber article (not shown). Device fastener **210** may include a fastener portion **212.** Protrusion **214** may be oriented adjacent fastener portion **212.** Protrusion **214** may attach to fastener portion **212** via a stem **216.**

Device fastener **210** may be configured to attach a device (not shown) to a rubber article. The device may be any of a variety of devices. The device may be any device that one would desire to attach to a rubber article. The device may include a tire electronics package. The device may be any device that one would desire to attach to a vehicle tire. The device may include any of a variety of devices, including sensors, power generators, transmitters, identification devices, and the like. The device may include a pressure sensor for measuring air pressure within a rubber article. The device may include a temperature sensor for measuring temperature within a rubber article. The device may include a radio frequency transmitter for transmitting information to a receiver. The device may include a power generator configured to generate electricity during use of a rubber article, such as a vehicle tire. The device may include a power storage unit such as a battery. Any of the various devices described herein may be attached to fastener portion **212** of device fastener **210.** Fastener portion **212** may attach to any of the various devices described herein.

Fastener portion **212** may be integrally connected to at least one of stem **216** and protrusion **214.** Fastener portion **212** may be removably connected to at least one of stem **216** and protrusion **214.** Fastener portion **212** may be any of a variety of fasteners, including for example a threaded fastener, a rivet, a bolt, a screw, a nail, a pin, a quick disconnect, a magnet, a barbed fitting, a press-fit connector, a ligature, a strap, an adhesive, and the like. Fastener portion **212** may be configured to removably attach to a device. Fastener portion **212** may be configured to permanently attach to a device.

In one embodiment, fastener portion **212** may include a threaded fastener with a nut. In this embodiment, at least a portion of fastener portion **212** may extend through an aperture in a device. The nut may be threaded onto fastener portion **212** to at least partially secure the device to device fastener **210.** In another embodiment, fastener portion **212** may be a threaded fastener having threads corresponding to threads in a device. In this embodiment, at least a portion of fastener portion **212** may extend into, and threadably engage with, a threaded aperture in a device.

Fastener portion **212** may comprise any of a variety of materials, including for example a rubber, a polymer, a metal, an alloy, a composite, an organic material, an inorganic material, and the like. Fastener portion **212** may be substantially rigid and configured to resist bending or other deformation of fastener portion **212.** Fastener portion **212** may be substantially resilient and configured to allow bending or other deformation of fastener portion **212.**

Protrusion **214** may substantially correspond in shape to a cavity, such as cavity **104** illustrated in **FIG. 1****.** Protrusion **214** may substantially correspond in size to a cavity in a rubber article. Protrusion **214** may substantially correspond in shape and size to a cavity in a rubber article. Protrusion **214** may have any of the variety of possible shapes and cross-sections as discussed above with respect to cavity **104** in **FIG. 1****.** Protrusion **214** may be a ribbed member having at least one rib oriented about the member and configured to maintain protrusion **214** inside cavity **104.**

Protrusion **214** may comprise any of a variety of materials, including for example a rubber, a polymer, a metal, an alloy, a composite, an organic material, an inorganic material, and the like. Protrusion **214** may include a material capable of deforming such that protrusion **214** may pass through a channel, such as channel **106** illustrated in **FIG. 1****.** Protrusion **214** may include a material that is rigid and configured to not deform as it passes through a channel, such as channel **106.** Protrusion **214** may include a material that has a hardness greater than the hardness of material surrounding channel **106.** Protrusion **214** may include a material that deforms less than channel **106.** Protrusion **214** may include a material that deforms more than channel **106.** Protrusion **214** may include a material that deforms the same as channel **106.** Protrusion **214** may include a structure that deforms less than channel **106.** Protrusion **214** may include a structure that deforms more than channel **106.** Protrusion **214** may include a structure that deforms the same as channel **106.**

Stem **216** may comprise any of a variety of materials, including for example a rubber, a polymer, a metal, an alloy, a composite, an organic material, an inorganic material, and the like. Stem **216** may have any of the variety of possible shapes and cross-sections as discussed above with respect to channel **106** in **FIG. 1****.** For example, stem **216** may have a substantially circular cross-section.

Either or both of protrusion **214** and stem **216** may be integrally connected to fastener portion **212.** Either or both of protrusion **214** and stem **216** may be removably connected to fastener portion **212.** Either or both of protrusion **214** and stem **216** may be integrally connected to fastener portion **212** and formed, machined, or molded with fastener portion **212.** Either or both of protrusion **214** and stem **216** may be integrally connected to fastener portion **212** and adhered, threaded, riveted, or otherwise fastened to fastener portion **212.**

Protrusion **214** may have a protrusion major width **D3.** Stem **216** may have a stem major width **D4.** Protrusion major width **D3** may be greater than stem major width **D4.**

Protrusion major width **D3** may be about the same as cavity major width **D1**. Protrusion major width **D3** may be greater than cavity major width **D1**. Protrusion major width **D3** may be less than cavity major width **D1**. Protrusion major width **D3** may be greater than channel major width **D2.**

Stem major width **D4** may be about the same as channel major width **D2.** Stem major width **D4** may be greater than channel major width **D2.** Stem major width **D4** may be less than channel major width **D2.**

Protrusion major width **D3** may be between about 110 % and about 400 % of stem major width **D4.** Protrusion major width **D3** may be between about 150 % and about 300 % of stem major width **D4.** Protrusion major width **D3** may be between about 200 % and about 250 % of stem major width **D4.** Protrusion major width **D3** may be about equal to stem major width **D4.**

Protrusion major width **D3** may be between about 110 % and about 400 % of channel major width **D2.** Protrusion major width **D3** may be between about 150 % and about 300 % of channel major width **D2.** Protrusion major width **D3** may be between about 200 % and about 250 % of channel major width **D2.** Protrusion major width **D3** may be between about 200 % and about 300 % of channel major width **D2.** Protrusion major width **D3** may be about 250 % of channel major width **D2.** Protrusion major width **D3** may be about equal to channel major width **D2.**

In one embodiment, protrusion major width **D3** may be about 5.0 mm. Protrusion major width **D3** may be between about 1.0 mm and about 10.0 mm. Protrusion major width **D3** may be between about 3.0 mm and about 7.0 mm. Protrusion major width **D3** may be between about 4.0 mm and about 6.0 mm.

Stem major width **D4** may be about 2.0 mm. Stem major width **D4** may be between about 0.2 mm and about 8.0 mm. Stem major width **D4** may be between about 0.5 mm and about 5.0 mm. Stem major width **D4** may be between about 1.0 mm and about 3.0 mm.

Stem **216** may include a stem length **L2.** Stem length **L2** may be measured substantially longitudinal along device fastener **210.** Where device fastener **210** is attached to a rubber article, and the rubber article is a vehicle tire, stem length **L2** may be measured in at least one of a radial direction and an axial direction within the tire. Stem length **L2** may be any of a variety of lengths. Stem length **L2** may be about 2.0 mm. Stem length **L2** may be between about 1.0 mm and about 3.0 mm. Stem length **L2** may be between about 0.5 mm and about 5.0 mm. Stem length **L2** may be between about 1.0 mm and about 7.0 mm.

Fastener portion **212** may include a fastener portion length **L3.** Fastener portion length **L3** may be any length as necessitated for attaching a device to fastener **210.** Fastener portion length **L3** may be between about 1.0 mm and about 50.0 mm.

**FIG. 3** illustrates a sectional view of a rubber article **300** having a body **302.** Rubber article **300** may have a surface **303.** Surface **303** may include a channel, similar to channel **106** described above with reference to **FIG. 1****,** which channel communicates with a cavity similar to cavity **104.**

A fastener **310** may be coupled to rubber article **300.** Fastener **310** may include a fastener portion **312.** Fastener **310** may include a protrusion **314** for engaging a cavity of rubber article **300.** Protrusion **314** may be oriented adjacent fastener portion **312.** Protrusion **314** may attach to fastener portion **312** via a stem **316.**

As illustrated, protrusion **314** may be oriented in a cavity of rubber article **300.** Stem **316** may be oriented in a channel of rubber article **300.** In one embodiment, fastener **310** may be attached to rubber article **300** by inserting protrusion **314** into a cavity in rubber article **300,** similar to cavity **104** described in **FIG. 1****.** Protrusion **314** may be first inserted into a channel, similar to channel **106,** and forced therethrough and into a cavity, similar to cavity **104.** As a result, protrusion **314** may engage a cavity, similar to cavity **104,** while stem **316** is oriented in a channel, similar to channel **106.** Fastener **310,** including fastener portion **312** may be coupled to rubber article **300** in such a manner.

Fastener **310** may be separated from rubber article **300** by forcing protrusion **314** from a cavity and through a channel, similar to cavity **104** and channel **106,** respectively. In such a manner, fastener **310** may be decoupled from rubber article **300.**

In one embodiment, a single protrusion **314** and cavity combination may be used to attach fastener **310** to rubber article **300.** In another embodiment, a plurality of protrusions **314** may be coupled to a plurality of cavities, to create a plurality of protrusion **314** and cavity combinations to attach fastener **310** to rubber article **300.** In another embodiment, a plurality of fasteners **310** may be coupled to a single rubber article **300** via a plurality of combinations of protrusions **314** and cavities.

As illustrated, and with reference to **FIG. 2** above, protrusion major width **D3** may be measured substantially parallel to surface **303.** Where rubber article **300** is a vehicle tire, protrusion major width **D3** may be measured in at least one of an axial direction and a circumferential direction within the tire. Protrusion major width **D3** may be defined as the maximum width of protrusion **314** measured substantially parallel to surface **303.** Protrusion major width **D3** may be defined as the maximum width of protrusion **314** measured in an axial direction within a tire. Protrusion major width **D3** may be defined as the maximum width of protrusion **314** measured in a circumferential direction within a tire.

As illustrated, and with reference to **FIG. 2** above, stem major width **D4** may be measured substantially parallel to surface **303.** Where rubber article **300** is a vehicle tire, stem major width **D4** may be measured in at least one of an axial direction and a circumferential direction within the tire. Stem major width **D4** may be defined as the maximum width of stem **316** measured substantially parallel to surface **303.** Stem major width **D4** may be defined as the maximum width of stem **316** measured in an axial direction within a tire. Stem major width **D4** may be defined as the maximum width of stem **316** measured in a circumferential direction within a tire.

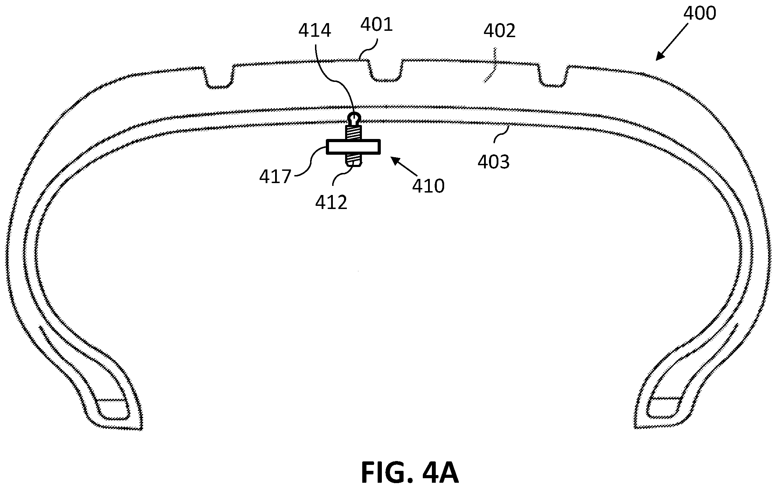

**FIG. 4A** illustrates a sectional view of a rubber article in the form of a tire **400** having a body **402.** Tire **400** may include a tread surface **401.** Tire **400** may have an inner surface **403.** Inner surface **403** may include a channel, similar to channel **106** described above with reference to **FIG. 1****,** which channel communicates with a cavity similar to cavity **104.**

A fastener **410** may be coupled to tire **400.** Fastener **410** may include a fastener portion **412.** Fastener **410** may include a protrusion **414** for engaging a cavity of tire **400.** Protrusion **414** may be oriented adjacent fastener portion **412.** Protrusion **414** may attach to fastener portion **412** via a stem.

A device **417** may be operatively connected to fastener portion **412.** In this manner, device **417** may be operatively connected to a rubber article, such as tire **400.** Device **417** may be threadably connected to fastener portion **412.** Device **417** may be removably connected to fastener portion **412.** Device **417** may be integrally connected to fastener portion **412.**

Body **402** may be contained between tread surface **401** of the tire and inner surface **403.** Inner surface **403** may be an innerliner. Body **402** may be contained between tread surface **401** of the tire and the innerliner.

In this manner, fastener **410** may be attached to tire **400** following molding of tire **400.** Fastener **410** may be attached to tire **400** prior to molding of tire **400.** Fastener **410** may be attached to tire **400** prior to curing of tire **400.** Fastener **410** may be attached to tire **400** following curing of tire **400.** Fastener **410** may be attached to tire **400** by a tire installer at a retail facility. Fastener **410** may be attached to tire **400** via an interference fit between protrusion **414** and a cavity in tire **400,** similar to cavity **104** referenced in **FIG. 1****.** Similarly, fastener **410** may be detached from tire **400** at any point following its attachment. Fastener **410** may be removed from tire **400** and replaced with another fastener **410.** In such a manner, fastener **410** may be replaced with a new undamaged fastener, a different style of fastener, an upgraded fastener, and the like. Fastener **410** may be added to tire **400** without causing damage to tire **400** or device **410.** Device **410** may be removed from tire **400** without causing damage to tire **400.**

Device **417** may be attached to fastener **410** at any point prior to, or during installation of tire **400** on a vehicle. Device **417** may be attached to fastener **410** before fastener **410** is attached to tire **400.** Device **417** may be attached to fastener **410** after fastener **410** is attached to tire **400.** Device **417** may be selectively attached to fastener **410,** and as a result device **417** may be selectively removed from fastener **410** and replaced with a new undamaged device, a different style of device, an upgraded device, a device with fresh batteries, and the like. Device **417** may be selectively attached to and detached from fastener **410** depending upon a user's desired use of device **417.** That is, device **417** may be added to tire **400** when necessary or desired, and device **417** may be removed from tire **400** when unnecessary or undesired.

Inner surface **403** may include a tire innerliner. In one embodiment, the tire innerliner may be pierced by the channel, similar to channel **106,** to allow communication between the cavity, similar to cavity **104,** and inner surface **403.** In another embodiment, the tire innerliner may follow the walls and contours formed by the channel and the cavity so as to form a continuous layer within the entire interior of the tire.

Body **402** may include a tire carcass. In one embodiment, the tire carcass may include any of a variety of reinforcement materials, including for example cords. At least one of the channel and the cavity may extend through the reinforcement materials. The reinforcement materials may be pieced by at least one of the channel and the cavity. The reinforcement materials may extend around at least one of the channel and the cavity so as to form a continuous reinforcement along the carcass. In another embodiment, the tire carcass may include any of a variety of reinforcement materials, including for example cords. The reinforcement materials may be oriented radially outwardly of at least one of the channel and the cavity. The reinforcement materials may be oriented radially outwardly of both the channel and the cavity, such that the reinforcement materials form a continuous reinforcement along the carcass.

Fastener **410** may be attached to tire **400** via one or more combination of protrusion **414** and a cavity. That is, fastener **410** may include one or more protrusion configured to engage one or more cavity. It is contemplated that the addition of protrusions and cavities may increase the retention of fastener **410** within tire **400.** It is contemplated that the addition of fasteners **410** within tire **400** may increase the retention of device **417** within tire **400.**

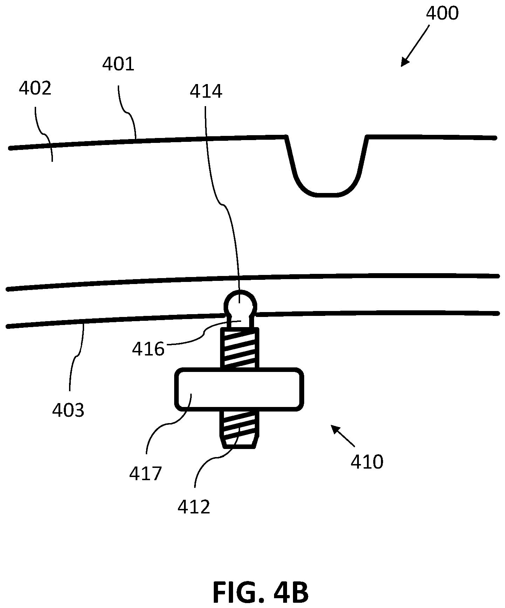

**FIG. 4B** illustrates a partial sectional view of tire **400** and fastener **410.** As illustrated, protrusion **414** may be attached to fastener **410** via a stem **416.**

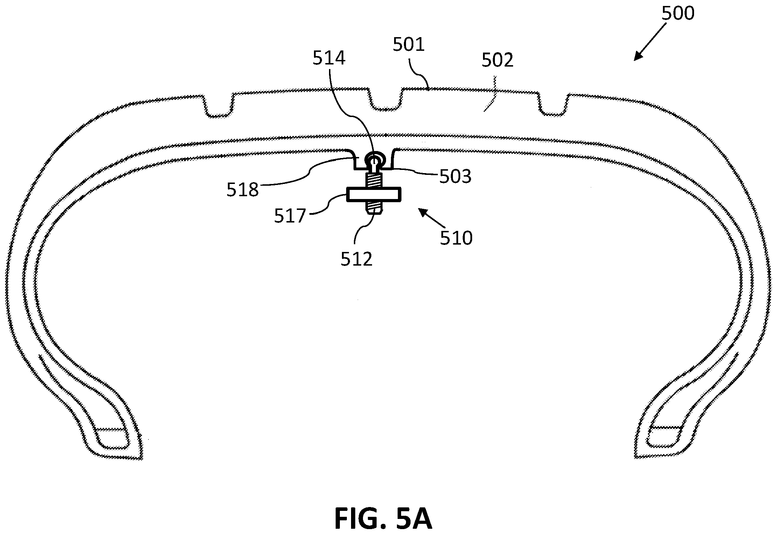

**FIG. 5A** illustrates a sectional view of a rubber article in the form of a tire **500** having a body 502. Tire **500** may include a tread surface **501.** Tire **500** may have an inner surface **503.** Inner surface **503** may include a channel, similar to channel **106** described above with reference to **FIG. 1****,** which channel communicates with a cavity similar to cavity **104.**

A fastener **510** may be coupled to tire **500.** Fastener **510** may include a fastener portion **512.** Fastener **510** may include a protrusion **514** for engaging a cavity of tire **500.** Protrusion **514** may be oriented adjacent fastener portion **512.** Protrusion **514** may attach to fastener portion **512** via a stem. A device **517** may be operatively connected to fastener portion **512.**

Tire **500** may include a stanchion **518** extending radially inwardly from the remainder of body **502.** Stanchion **518** may include a portion of tire **500** sized and shaped to contain a cavity, similar to cavity **104** illustrated in **FIG. 1****.** Stanchion **518** may include a portion of tire **500** sized and shaped to contain a cavity and a channel, similar to cavity **104** and channel **106.**

Body **502** may be contained between tread surface **501** of the tire and inner surface **503.** Inner surface **503** may be an innerliner. Body **502** may be contained between tread surface **501** of the tire and the innerliner.

Stanchion **518** may be substantially the same material otherwise used in tire **500.** Stanchion **518** may be a rubber material. Stanchion **518** may be molded into tire **500.** Stanchion **518** may be manufactured as a part of tire **500.** Stanchion **518** may be part of a patch added to a tire **500** following curing of tire **500.** At least one of the cavity and the channel may be molded into stanchion **518** during its manufacture. Alternatively, at least one of the cavity and the channel may be machined, cut, or otherwise added to stanchion **518** after its manufacture.

Stanchion **518** may be radially inward of any reinforcement within tire **500.** Stanchion **518** may be radially inward of a tire innerliner. Stanchion **518** may be covered by a tire innerliner. Stanchion **518** may be made of a material that has a permeability similar to a tire innerliner. Stanchion **518** may be made of a butyl rubber.

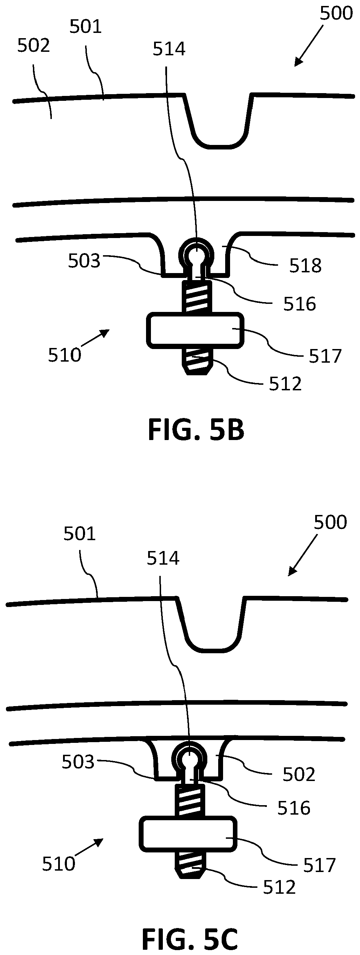

**FIG. 5B** illustrates a partial sectional view of tire **500** and fastener **510.** As illustrated, protrusion **514** may be attached to fastener **510** via a stem **516.** As illustrated, stanchion **518** may be an integral part of tire **500.**

**FIG. 5C** illustrates a partial sectional view of tire **500** and fastener **510.** As illustrated, protrusion **514** may be attached to fastener **510** via a stem 516.

As illustrated, stanchion **518** may be attached to tire **500.** Stanchion **518** may be a part of a patch. Stanchion **518** may be attached to tire **500** following manufacture of tire **500.** Stanchion **518** may be adhered to tire **500.** Stanchion **518** may be fastened to tire **500.** Stanchion **518** may be laminated with tire **500.**

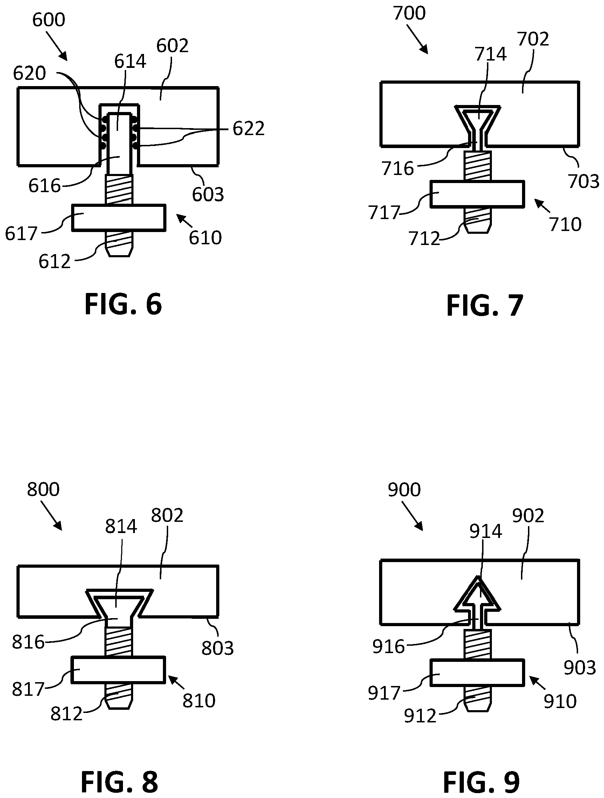

**FIG. 6** illustrates a sectional view of a rubber article **600** having a body **602.** Rubber article **600** may have a surface **603.** Surface **603** may include a channel, similar to channel **106** described above with reference to **FIG. 1****,** which channel communicates with a cavity similar to cavity **104.**

A fastener **610** may be coupled to rubber article **600.** Fastener **610** may include a fastener portion **612.** Fastener **610** may include a protrusion **614** for engaging a cavity of rubber article **600.** Protrusion **614** may be oriented adjacent fastener portion **612.** Protrusion **614** may attach to fastener portion **612** via a stem **616.** At least one of protrusion **614** and its corresponding cavity may have any of a variety of cross-sections, including for example a circular cross-section. Fastener portion **612** may engage a device **617.**

As illustrated, protrusion **614** may include at least one protrusion engagement element **620** oriented on its periphery. At least one protrusion engagement element **620** may be a rib. At least one protrusion engagement element **620** may be a bump. At least one protrusion engagement element **620** may include any positive element extending from the surface of protrusion **614.** Alternatively, protrusion **614** may include at least one negative element configured to engage at least one cavity engagement element **622.**

The cavity may include at least one cavity engagement element **622** oriented on its inner surface. At least one cavity engagement element **622** may be a rib. At least one cavity engagement element **622** may be a bump. At least one cavity engagement element **622** may include any positive element extending from the inner surface of the cavity. Alternatively, the cavity may include at least one negative element configured to engage at least one protrusion engagement element **620.**

At least one protrusion engagement element **620** may be configured to engage the cavity. At least one protrusion engagement element **620** may be configured to engage at least one cavity engagement element **622.** At least one cavity engagement element **622** may be configured to engage protrusion **614.** It is contemplated that protrusion **614** may include at least one protrusion engagement element **620,** while the cavity does not include any cavity engagement element **622.** It is contemplated that the cavity may include at least one cavity engagement element **622,** while protrusion **614** does not include any protrusion engagement element **620.** It is contemplated that the cavity may include at least one cavity engagement element **622** and protrusion **614** may include at least one protrusion engagement element **620.**

**FIG. 7** illustrates a sectional view of a rubber article **700** having a body **702.** Rubber article **700** may have a surface **703.** Surface **703** may include a channel, similar to channel **106** described above with reference to **FIG. 1****,** which channel communicates with a cavity similar to cavity **104.**

A fastener **710** may be coupled to rubber article **700.** Fastener **710** may include a fastener portion **712.** Fastener **710** may include a protrusion **714** for engaging a cavity of rubber article **700.** Protrusion **714** may be oriented adjacent fastener portion **712.** Protrusion **714** may attach to fastener portion **712** via a stem **716.** Fastener portion **712** may engage a device **717.**

As illustrated, at least one of protrusion **714** and the corresponding cavity may be in the shape of an inverted cone, an inverted tetrahedron, an inverted pyramid, and the like. At least one of protrusion **714** and the corresponding cavity may have a circular cross-section. At least one of protrusion **714** and the corresponding cavity may have a triangular cross-section. At least one of protrusion **714** and the corresponding cavity may have a quadrilateral cross-section, including for example a square cross-section or a rectangular cross-section. At least one of protrusion **714** and the corresponding cavity may have a cross-section having any number of sides.

**FIG.** 8 illustrates a sectional view of a rubber article **800** having a body **802.** Rubber article **800** may have a surface **803.** Surface **803** may include a channel, similar to channel **106** described above with reference to **FIG. 1****,** which channel communicates with a cavity similar to cavity **104.**

A fastener **810** may be coupled to rubber article **800.** Fastener **810** may include a fastener portion **812.** Fastener **810** may include a protrusion **814** for engaging a cavity of rubber article **800.** Protrusion **814** may be oriented adjacent fastener portion **812.** Protrusion **814** may attach to fastener portion **812** via a stem **816.** Fastener portion **812** may engage a device **817.**

As illustrated, at least one of protrusion **814** and the corresponding cavity may be in the shape of an inverted cone, an inverted tetrahedron, an inverted pyramid, and the like. At least one of protrusion **814** and the corresponding cavity may have a circular cross-section. At least one of protrusion **814** and the corresponding cavity may have a triangular cross-section. At least one of protrusion **814** and the corresponding cavity may have a quadrilateral cross-section, including for example a square cross-section or a rectangular cross-section. At least one of protrusion **814** and the corresponding cavity may have a cross-section having any number of sides.

**FIG. 9** illustrates a sectional view of a rubber article **900** having a body **902.** Rubber article **900** may have a surface **903.** Surface **903** may include a channel, similar to channel **106** described above with reference to **FIG. 1****,** which channel communicates with a cavity similar to cavity **104.**

A fastener **910** may be coupled to rubber article **900.** Fastener **910** may include a fastener portion **912.** Fastener **910** may include a protrusion **914** for engaging a cavity of rubber article **900.** Protrusion **914** may be oriented adjacent fastener portion **912.** Protrusion **914** may attach to fastener portion **912** via a stem **916.**

As illustrated, at least one of protrusion **914** and the corresponding cavity may be in the shape of a cone, a tetrahedron, a pyramid, and the like. At least one of protrusion **914** and the corresponding cavity may have a circular cross-section. At least one of protrusion **914** and the corresponding cavity may have a triangular cross-section. At least one of protrusion **914** and the corresponding cavity may have a quadrilateral cross-section, including for example a square cross-section or a rectangular cross-section. At least one of protrusion **914** and the corresponding cavity may have a cross-section having any number of sides.

It is contemplated that the force necessary to install a fastener by insertion of a protrusion through a channel and into a cavity would be any of a variety of forces. For example, a human may install the fastener as described using only the force in ones hands. A human may install the fastener using only the force in ones hands, but with the assistance of a tool. A machine may install the fastener using any amount of force necessary and possible with known machine actuation. In one embodiment, the fastener may require less force to install than to remove. In another embodiment, the fastener may require more force to install than to remove. The fastener may require about the same force to install as to remove.

Prior art devices may be adhered directly to a tire's interior surface using an adhesive, thus creating a lamination between the device, a device patch, a device base, or the like, and the tire's interior surface. During use of the tire, the tire's interior surface undergoes many deformations in each revolution of the tire (cycle of the tire). A tire may undergo a very large number of cycles in its lifetime-perhaps several million cycles. As a result, the lamination between the device, in whatever manner, and the tire's interior surface may undergo a very high number of cycles that may place any of strain on the lamination, deformation of the lamination, force within the lamination attempting to pull the device and the tire away from one another, and the like.

Attachment of a device and/or fastener to the tire in the manner described above, wherein a cavity is oriented within, or on an inner surface of, the tire, which is engaged by a protrusion extending from the fastener, eliminates many of the forces, strains, deformations, and the like found in the lamination between prior art devices and the tire interior surface when those devices are used.

Attachment of a device and/or fastener to the tire in the manner described above, wherein a cavity is oriented within, or on an inner surface of, the tire, which is engaged by a protrusion extending from the fastener, may allow the device and/or fastener to move at least somewhat relative to the tire. In this manner, the interface between the device/fastener and the tire may experience less forces, strains, and deformations than may be experienced via a more rigid interface, such as a lamination of the device directly to the tire interior. That is, the device and/or fastener, may have some "play" to move at least somewhat laterally, proximally, distally, or in terms of a tire, axially, circumferentially, or radially. This "play" may allow the device and/or fastener to be at least partially isolated from some of the forces, deformations, strains, and the like imparted to the tire from outside the tire during its operation, including for example the force imparted to the tire from hitting a pothole, or the like. While the tire deforms due to the force of hitting the pothole, the device and/or fastener may be allowed to move at least somewhat such that damage to the device is at least partially mitigated. Similarly, while the tire deforms due to the force of hitting the pothole, the interface between the fastener's protrusion and the tire's cavity is allowed some flex without detaching, whereas a traditional directly laminated device interface may not be able to withstand the strain, and may begin to partially delaminate or completely delaminate. The device and/or fastener may have some "play" particularly where the fastener protrusion is round or spherical in nature, as well as the corresponding cavity. For example, the protrusion and the cavity may interact similar to a ball and socket joint.

In each of the embodiments above, it is contemplated that a rubber article could have a protrusion, which engages a cavity within a fastener. That is, a rubber article may have a protrusion connected to the rubber article by a stem. The fastener may have a cavity in communication with a surface of the fastener via a channel. The two may engage as discussed above. The fastener may attach to a device, which could be any of the devices described herein. The rubber article could be any of the rubber articles described herein, including for example a tire.

## Claims

1. A tire (400, 500), comprising:
a first surface (103, 303, 403, 503, 603, 703, 803, 903);
a second surface (401, 501); and
a tire body (102, 302, 402, 502, 602, 702, 802, 902) contained between the first surface (103, 303, 403, 503, 603, 703, 803, 903) and the second surface (401, 501);
wherein the tire body (102, 302, 402, 502, 602, 702, 802, 902) comprises a cavity (104) having a cavity major width (D1) in at least one of an axial direction and a circumferential direction,
wherein a channel (106) extends between the cavity (104) and the first surface (103, 303, 403, 503, 603, 703, 803, 903),
wherein the channel (106) has a channel major width (D2) in at least one of the axial direction and the circumferential direction, and
wherein the cavity major width (D1) is greater than the channel major width (D2),
**characterized by**
a fastener (210, 310, 410, 510, 610, 710, 810, 910) including a fastener portion (212, 312, 412, 512, 612, 712, 812, 912) and a protrusion (214, 314, 414, 514, 614, 714, 814, 914) oriented adjacent to the fastener portion (212, 312, 412, 5 12, 612, 712, 812, 912);
wherein the fastener portion (212, 312, 412, 512, 612, 712, 812, 912) is configured to at least one of removably attach to a device (417, 517, 617, 717, 817, 917) and permanently attach to a device (417, 517, 617, 717, 817, 917),
wherein the fastener portion (212, 312, 412, 512, 612, 712, 812, 912) extends through an aperture in the device (417, 517, 617, 717, 817, 917), and
wherein the protrusion (214, 314, 414, 514, 614, 714, 814, 914) is engaged within the cavity (104).

2. The tire (400, 500) of claim 1, wherein the cavity (104) has a substantially circular cross-section.

3. The tire (400, 500) of claim 1 or claim 2, wherein the channel (106) has a substantially circular cross-section.

4. The tire (400, 500) of any one of claims 1-3, wherein the cavity (104) is at least one of: generally sphere-shaped, generally cylinder-shaped, generally teardrop-shaped, and generally cone-shaped.

5. The tire (400, 500) of any one of claims 1-4, wherein the fastener portion (212, 312, 412, 512, 612, 712, 812, 912) engages the device (417, 517, 617, 717, 817, 917).

6. The tire (400, 500) of any one of claims 1-5, wherein the fastener portion (417, 517, 617, 717, 817, 917) is a threaded fastener.

7. The tire (400, 500) of any one of claims 1-6, wherein at least one of the protrusion (214, 314, 414, 514, 614, 714, 814, 914) and the cavity (104) comprises at least one rib (620, 622).

8. The tire (400, 500) of any one of claims 1-7, wherein the cavity (104) has a shape, and wherein the protrusion (214, 314, 414, 514, 614, 714, 814, 914) has a shape that is complimentary to the cavity (104) shape.

9. The tire (400, 500) of any one of claims 1-8, wherein the protrusion (214, 314, 414, 514, 614, 714, 814, 914) has a protrusion major width (D3), and wherein the protrusion major width (D3) is greater than the channel major width (D2).

10. The tire (400, 500) of any one of claims 1-9, wherein the tire body (102, 302, 402, 502, 602, 702, 802, 902) includes a stanchion (518) extending radially inwardly, and wherein the stanchion (518) comprises the cavity (104).

11. The tire (400, 500) of claim 1, wherein the cavity (104) has the shape of at least one of: an inverted cone, an inverted tetrahedron, an inverted pyramid, a tetrahedron, and a pyramid.

12. The tire (400, 500) of claim 1, wherein the cavity (104) has at least one of: a triangular cross-section and a quadrilateral cross-section.

13. The tire (400, 500) of claim 1, wherein the protrusion (214, 314, 414, 514, 614, 714, 814, 914) has the shape of at least one of: an inverted cone, an inverted tetrahedron, and an inverted pyramid.

14. The tire (400, 500) of claim 1, wherein the protrusion (214, 314, 414, 514, 614, 714, 814, 914) has the shape of at least one of: a cone, a tetrahedron, and a pyramid.

15. The tire (400, 500) of claim 1, wherein the channel (106) is cuboid in shape.

## Patentansprüche

1. Reifen (400, 500), umfassend:
eine erste Oberfläche (103, 303, 403, 503, 603, 703, 803, 903);
eine zweite Oberfläche (401, 501); und
einen Reifenkörper (102, 302, 402, 502, 602, 702, 802, 902), der von der ersten Oberfläche (103, 303, 403, 503, 603, 703, 803, 903) und der zweiten Oberfläche (401, 501) umgrenzt ist;
wobei der Reifenkörper (102, 302, 402, 502, 602, 702, 802, 902) einen Hohlraum (104) mit einer Hohlraumhauptbreite (D1) in entweder einer Achsrichtung und/oder einer Umfangsrichtung umfasst,
wobei sich ein Kanal (106) zwischen dem Hohlraum (104) und der ersten Oberfläche (103, 303, 403, 503, 603, 703, 803, 903) erstreckt,
wobei der Kanal (106) eine Kanalhauptbreite (D2) in entweder der Axialrichtung und/oder der Umfangsrichtung aufweist und
wobei die Hohlraumhauptbreite (D1) größer als die Kanalhauptbreite (D2) ist, **gekennzeichnet durch**
ein Befestigungselement (210, 310, 410, 510, 610, 710, 810, 910), das einen Befestigungsabschnitt (212, 312, 412, 512, 612, 712, 812, 912) und einen Fortsatz (214, 314, 414, 514, 614, 714, 814, 914), der angrenzend an den Befestigungsabschnitt (212, 312, 412, 512, 612, 712, 812, 912) ausgerichtet ist, aufweist;
wobei der Befestigungsabschnitt (212, 312, 412, 512, 612, 712, 812, 912) dazu ausgelegt ist, entweder lösbar an einer Vorrichtung (417, 517, 617, 717, 817, 917) und/oder dauerhaft an einer Vorrichtung (417, 517, 617, 717, 817, 917) befestigt zu werden,
wobei sich der Befestigungsabschnitt (212, 312, 412, 512, 612, 712, 812, 912) durch eine Öffnung in der Vorrichtung (417, 517, 617, 717, 817, 917) erstreckt, und
wobei der Fortsatz (214, 314, 414, 514, 614, 714, 814, 914) in den Hohlraum (104) eingreift.

2. Reifen (400, 500) nach Anspruch 1, wobei der Hohlraum (104) einen im Wesentlichen kreisförmigen Querschnitt aufweist.

3. Reifen (400, 500) nach Anspruch 1 oder Anspruch 2, wobei der Kanal (106) einen im Wesentlichen kreisförmigen Querschnitt aufweist.

4. Reifen (400, 500) nach einem der Ansprüche 1 bis 3, wobei der Hohlraum (104) entweder im Allgemeinen kugelförmig, im Allgemeinen zylinderförmig, im Allgemeinen tropfenförmig und/oder im Allgemeinen kegelförmig ist.

5. Reifen (400, 500) nach einem der Ansprüche 1 bis 4, wobei der Befestigungsabschnitt (212, 312, 412, 512, 612, 712, 812, 912) mit der Vorrichtung (417, 517, 617, 717, 817, 917) in Eingriff ist.

6. Reifen (400, 500) nach einem der Ansprüche 1 bis 5, wobei der Befestigungsabschnitt (417, 517, 617, 717, 817, 917) ein Befestigungselement mit Gewinde ist.

7. Reifen (400, 500) nach einem der Ansprüche 1 bis 6, wobei entweder der Fortsatz (214, 314, 414, 514, 614, 714, 814, 914) und/oder der Hohlraum (104) mindestens eine Rippe (620, 622) umfasst.

8. Reifen (400, 500) nach einem der Ansprüche 1 bis 7, wobei der Hohlraum (104) eine Form aufweist und wobei der Fortsatz (214, 314, 414, 514, 614, 714, 814, 914) eine zu der Form des Hohlraums (104) komplementäre Form aufweist.

9. Reifen (400, 500) nach einem der Ansprüche 1 bis 8, wobei der Fortsatz (214, 314, 414, 514, 614, 714, 814, 914) eine Fortsatzhauptbreite (D3) aufweist und wobei die Fortsatzhauptbreite (D3) größer als die Kanalhauptbreite (D2) ist.

10. Reifen (400, 500) nach einem der Ansprüche 1 bis 9, wobei der Reifenkörper (102, 302, 402, 502, 602, 702, 802, 902) eine sich radial nach innen erstreckende Stütze (518) aufweist und wobei die Stütze (518) den Hohlraum (104) umfasst.

11. Reifen (400, 500) nach Anspruch 1, wobei der Hohlraum (104) die Form von entweder einem umgekehrten Kegel, einem umgekehrten Tetraeder, einer umgekehrten Pyramide, einem Tetraeder und/oder einer Pyramide aufweist.

12. Reifen (400, 500) nach Anspruch 1, wobei der Hohlraum (104) entweder einen dreieckigen Querschnitt und/oder einen vierseitigen Querschnitt aufweist.

13. Reifen (400, 500) nach Anspruch 1, wobei der Fortsatz (214, 314, 414, 514, 614, 714, 814, 914) die Form von entweder einem umgekehrten Kegel, einem umgekehrten Tetraeder und/oder einer umgekehrten Pyramide aufweist.

14. Reifen (400, 500) nach Anspruch 1, wobei der Fortsatz (214, 314, 414, 514, 614, 714, 814, 914) die Form von entweder einem Kegel, einem Tetraeder und/oder einer Pyramide aufweist.

15. Reifen (400, 500) nach Anspruch 1, wobei der Kanal (106) quaderförmig ist.

## Revendications

1. Pneu (400, 500), comprenant :
une première surface (103, 303, 403, 503, 603, 703, 803, 903) ;
une deuxième surface (401, 501) ; et
un corps de pneu (102, 302, 402, 502, 602, 702, 802, 902) contenu entre la première surface (103, 303, 403, 503, 603, 703, 803, 903) et la deuxième surface (401, 501) ;
dans lequel le corps de pneu (102, 302, 402, 502, 602, 702, 802, 902) comprend une cavité (104) ayant une largeur majeure de cavité (D1) dans au moins l'une parmi une direction axiale et une direction circonférentielle,
dans lequel un canal (106) s'étend entre la cavité (104) et la première surface (103, 303, 403, 503, 603, 703, 803, 903),
dans lequel le canal (106) a une largeur majeure de canal (D2) dans au moins l'une parmi la direction axiale et la direction circonférentielle, et
dans lequel la largeur majeure de cavité (D1) est plus grande que la largeur majeure de canal (D2), **caractérisé par**
un élément de fixation (210, 310, 410, 510, 610, 710, 810, 910) incluant une partie d'élément de fixation (212, 312, 412, 512, 612, 712, 812, 912) et une partie saillante (214, 314, 414, 514, 614, 714, 814, 914) orientée adjacente à la partie d'élément de fixation (212, 312, 412, 512, 612, 712, 812, 912) ;
dans lequel la partie d'élément de fixation (212, 312, 412, 512, 612, 712, 812, 912) est configurée pour au moins l'une parmi une fixation amovible à un dispositif (417, 517, 617, 717, 817, 917) et une fixation permanente à un dispositif (417, 517, 617, 717, 817, 917),
dans lequel la partie d'élément de fixation (212, 312, 412, 512, 612, 712, 812, 912) s'étend à travers une ouverture dans le dispositif (417, 517, 617, 717, 817, 917), et
dans lequel la partie saillante (214, 314, 414, 514, 614, 714, 814, 914) est en prise à l'intérieur de la cavité (104).

2. Pneu (400, 500) selon la revendication 1, dans lequel la cavité (104) a une section transversale essentiellement circulaire.

3. Pneu (400, 500) selon la revendication 1 ou la revendication 2, dans lequel le canal (106) a une section transversale essentiellement circulaire.

4. Pneu (400, 500) selon l'une quelconque des revendications 1 à 3, dans lequel la cavité (104) est au moins l'une parmi : généralement en forme de sphère, généralement en forme de cylindre, généralement en forme de larme, et généralement en forme de cône.

5. Pneu (400, 500) selon l'une quelconque des revendications 1 à 4, dans lequel la partie d'élément de fixation (212, 312, 412, 512, 612, 712, 812, 912) vient en prise avec le dispositif (417, 517, 617, 717, 817, 917).

6. Pneu (400, 500) selon l'une quelconque des revendications 1 à 5, dans lequel la partie d'élément de fixation (417, 517, 617, 717, 817, 917) est un élément de fixation fileté.

7. Pneu (400, 500) selon l'une quelconque des revendications 1 à 6, dans lequel au moins l'une parmi la partie saillante (214, 314, 414, 514, 614, 714, 814, 914) et la cavité (104) comprend au moins une nervure (620, 622).

8. Pneu (400, 500) selon l'une quelconque des revendications 1 à 7, dans lequel la cavité (104) a une forme, et dans lequel la partie saillante (214, 314, 414, 514, 614, 714, 814, 914) a une forme qui est complémentaire à la forme de la cavité (104).

9. Pneu (400, 500) selon l'une quelconque des revendications 1 à 8, dans lequel la partie saillante (214, 314, 414, 514, 614, 714, 814, 914) a une largeur majeure de partie saillante (D3), et dans lequel la largeur majeure de partie saillante (D3) est plus grande que la largeur majeure de canal (D2).

10. Pneu (400, 500) selon l'une quelconque des revendications 1 à 9, dans lequel le corps de pneu (102, 302, 402, 502, 602, 702, 802, 902) inclut un élément d'arrimage (518) s'étendant radialement vers l'intérieur, et dans lequel l'élément d'arrimage (518) comprend la cavité (104).

11. Pneu (400, 500) selon la revendication 1, dans lequel la cavité (104) a la forme d'au moins l'un parmi : un cône inversé, un tétraèdre inversé, une pyramide inversée, un tétraèdre et une pyramide.

12. Pneu (400, 500) selon la revendication 1, dans lequel la cavité (104) a au moins l'une parmi : une section transversale triangulaire et une section transversale quadrilatérale.

13. Pneu (400, 500) selon la revendication 1, dans lequel la partie saillante (214, 314, 414, 514, 614, 714, 814, 914) a la forme d'au moins l'un parmi : un cône inversé, un tétraèdre inversé, et une pyramide inversée.

14. Pneu (400, 500) selon la revendication 1, dans lequel la partie saillante (214, 314, 414, 514, 614, 714, 814, 914) a la forme d'au moins l'un parmi : un cône, un tétraèdre et une pyramide.

15. Pneu (400, 500) selon la revendication 1, dans lequel le canal (106) est de forme parallélépipédique.
